# EUROPÄISCHE PATENTSCHRIFT

(11) **EP 2 726 237 B1**
(45) Veröffentlichungstag und Bekanntmachung des Hinweises auf die Patenterteilung: **21.03.2018**
(21) Anmeldenummer: 12729986.5
(22) Anmeldetag: 28.06.2012
(51) Int. Cl.: B23B 29/20

(54) **ANORDNUNG MINDESTENS EINES NUTENSTEINS UND EINES WERKZEUGHALTERS FÜR WERKZEUGE UND ANORDNUNG MINDESTENS EINES NUTENSTEINS UND EINES WERKZEUGTRÄGERS ZUR AUFNAHME EINES WERKZEUGHALTERS**
ARRANGEMENT OF AT LEAST ONE KEY AND A TOOL HOLDER FOR TOOLS AND ARRANGEMENT OF AT LEAST ONE KEY AND A TOOL CARRIER FOR HOSTING A TOOL HOLDER
ARRANGEMENT D'AU MOINS UNE CLÉ ET D'UN PORTE-OUTIL POUR OUTILS ET ARRANGEMENT D'AU MOINS UNE CLÉ ET D'UN SUPPORT D'OUTIL POUR RÉCEPTIONNER UN PORTE-OUTIL

(30) Priorität: 30.06.2011 DE 102011078445
(43) Veröffentlichungstag der Anmeldung: 07.05.2014
(73) Patentinhaber: WTO Werkzeug-Einrichtungen GmbH, 77797 Ohlsbach (DE)
(72) Erfinder: JANSEN, Karlheinz, 77746 Schutterwald (DE); MAUCH, Hanjo, 77933 Lahr-Sulz (DE)
(74) Vertreter: DREISS Patentanwälte PartG mbB
(86) Internationale Anmeldenummer: PCT/EP2012/062524
(87) Internationale Veröffentlichungsnummer: WO 2013/000983

(56) Entgegenhaltungen:
- EP-A1- 0 641 943
- EP-A1- 1 992 435
- DE-A1-102005 060 817
- DE-A1-102008 048 206
- DE-A1-102009 033 805
- US-A1- 2011 094 355

## Beschreibung

### Stand der Technik

Aus dem Stand der Technik sind Werkzeugträger bekannt, die beispielsweise in Form eines sogenannten Revolvers, an einer Werkzeugmaschine angeordnet sind. Diese Werkzeugträger weisen mindestens eine Spannfläche auf, an der ein auswechselbarer Werkzeughalter positioniert und befestigt werden kann.

Ein sehr erfolgreiches System von Werkzeugträger und Werkzeughalter ist der sogenannte VDI-Werkzeughalter, der in der DIN ISO 10889-1 normiert ist. Bei diesem Werkzeugträger ist eine ebene Spannfläche vorgesehen in der eine Aufnahmebohrung ausgebildet ist. Darüber hinaus ist in der Spannfläche eine Anschlussbohrung zur Versorgung des Werkzeughalters mit Kühlschmiermittel vorgesehen.

Der zu diesem Werkzeugträger kompatible Werkzeughalter weist eine Kontaktfläche auf, aus der ein Zylinderschaft herausragt. Der Zylinderschaft ist mit der Aufnahmebohrung des Werkzeugträgers kompatibel, während die Kontaktfläche des Werkzeughalters mit der Spannfläche des Werkzeugträgers kompatibel ist. In dem Zylinderschaft ist eine Verzahnung ausgebildet, die dazu dient, den Werkzeughalter an dem Werkzeugträger so zu fixieren, dass der Werkzeughalter die zur Bearbeitung eines Werkstücks erforderlichen Kräfte auf den Werkzeugträger übertragen kann.

Neben dem einfachen Aufbau sind auch die geringen Herstellungskosten sowohl für den Werkzeugträger beziehungsweise die Schnittstelle zwischen Werkzeugträger und Werkzeughalter bei dem System gemäß DIN ISO 10889-1 besonders hervorzuheben. Nachteilig an diesem System ist jedoch, die verhältnismäßig geringe Wiederholgenauigkeit beim Einsetzen von Werkzeughaltern in ein und dieselbe Aufnahmebohrung. Diese relativ geringe Wiederholgenauigkeit führt im Ergebnis dazu, dass sich die Position der Schneide des Werkzeugs durch einen Werkzeugwechsel ändert. Um trotzdem eine gleichbleibend hohe Fertigungsqualität zu gewährleisten, müssten die Abweichungen in der Positionierung des Werkstückhalters erfasst und von der NC-Steuerung der Werkzeugmaschine kompensiert werden. Im ersteren Fall leidet die Genauigkeit der Werkstücke. Im zweiten Fall steigen die Herstellungskosten stark an.

Dieser Nachteil des VDI-Werkzeughalters ist bereits seit längerem bekannt und es gibt verschiedene Versuche, diesen Nachteil zu überwinden.

Beispielhaft seien in diesem Zusammenhang die DE 10 2005 045 662 A1 genannt. Bei diesem nicht mit dem VDI-Werkzeughalter kompatiblen System sind in dem Werkzeugrevolver zwei zueinander beabstandete und einstellbare trapezförmige Passkörper vorgesehen. Diese Passkörper ragen über die Spannfläche hinaus und wirken mit komplementär geformten Passflächen in dem Werkzeughalter zusammen und ermöglichen eine exakte Positionierung des Werkzeughalters relativ zur Spannfläche des Werkzeugträgers. Dabei sind die Passkörper auf einer gesonderten Platte befestigt, die beim Hersteller des Werkzeugrevolvers justiert und anschließend fixiert wird, so dass die Passkörper mit der gewünschten Genauigkeit relativ zur Aufnahmebohrung des Werkzeugträgers positioniert sind. Nachteilig an diesem System ist der vergleichsweise hohe Herstellungsaufwand, da in die Spannfläche eine Nut ausgefräst werden muss, die Platz für die Trägerplatte der Passkörper bietet. Anschließend müssen die Passkörper relativ zum Werkzeugrevolver ausgerichtet und in dieser Position verstiftet und/oder verschraubt werden. Dieser Vorgang erfordert sehr qualifizierte Mitarbeiter und ist trotzdem mit einer gewissen Fehleranfälligkeit behaftet.

Ein ähnliches System, welches auch mit trapezförmigen Passkörpern arbeitet, ist aus der EP 780179 B1 bekannt. Hier werden an den Stirnflächen des Werkzeugrevolvers trapezförmige Passkörper ausgebildet, die mit komplementär geformten Vertiefungen im Werkzeughalter zusammenwirken. Beiden Systemen ist gemeinsam, dass ihre Herstellungskosten relativ hoch sind und außerdem beim Einrichten relativ viel Arbeitszeit von hochqualifiziertem Personal benötigt wird.

Aus der DE 199 40 330 C2 ist ein System umfassend einen Werkzeugträger und einen Werkzeughalter bekannt deren Spannbeziehungsweise Kontaktflächen kreuzförmig angeordnete Nuten aufweisen. In die Nuten des Werkzeughalters werden Nutensteine eingesetzt, die über die Kontaktfläche hinausragen.

Zur Verbesserung der Positioniergenauigkeit und der Wiederholgenauigkeit sind die Nutensteine aus mehreren Teilen zusammengesetzt. Ein Teil dieses Nutensteins, der eine Anlagefläche umfasst, ist entlang einer schiefen Ebene verschiebbar. Auf diese Weise lässt sich die Anlagefläche des verschiebbaren Teils des Nutensteins parallel zu der Spannfläche des Werkzeugträgers verschieben und damit die Position des in dem Werkzeughalter aufgenommenen Werkzeugs einstellen. Nachteilig an dieser Lösung sind der hohe fertigungstechnische Aufwand, der enorme Platzbedarf, die Schwächung der Werkzeughalter und die erschwerte Zugänglichkeit der Einstellschrauben.

Aus der EP 1 992 435 A1 und der DE 10 2008 048 206 A1 sind geschlitzte Nutensteine bekannt, deren Schlitze parallel zu der Grundfläche des Nutensteins angeordnet sind, so dass die Anlageflächen dieser Nutensteine in Richtung einer Grundfläche der Nutensteine einfedern können.

Aus der DE 10 2009 033 805 A1 sind leistenförmige Ausrichtkörper bekannt, die seitlich an einen Werkzeugträger angeschraubt werden. An den Ausrichtkörpern sind Ausrichtteile 22 angeordnet, die mit entsprechend ausgebildeten Vertiefungen im Werkzeugträger zusammenwirken.

### Offenbarung der Erfindung

Der Erfindung liegt die Aufgabe zugrunde, einen Werkzeugträger und einen damit kompatiblen Werkzeughalter bereitzustellen, der einfach aufgebaut ist und eine deutlich höhere Positioniergenauigkeit aufweist als ein herkömmliches VDI-System bestehend aus Werkzeugträger und Werkzeughalter nach DIN ISO 10889-1 oder/und bekannten Systemen in BMT-Ausführung, also mit Werkzeughaltern die über Schrauben oder anderen Spannelementen auf einem Werkzeugträger befestigt werden.

Diese Aufgabe wird erfindungsgemäß durch eine Anordnung mindestens eines Nutensteins und eines Werkzeughalters für Werkzeuge gemäß Anspruch 1 und eine Anordnung mindestens eines Nutensteins und eines Werkzeugträgers zur Aufnahme eines Werkzeughalters gemäß Anspruch 2 gelöst.

Ausgangsbasis der erfindungsgemäßen Schnittstelle ist ein geschlitzter Nutenstein .

Der Schlitz verläuft in der gleichen Richtung wie die mindestens eine Anlagefläche, und schließt bevorzugt einen Winkel größer null (> 0°) mit der Anlagefläche ein. Der Grund des Schlitzes verläuft zumeist parallel zu der Grundfläche. Der Schlitz ist bei vielen Anwendungen außermittig angeordnet.

Der Nutenstein muss nur am Werkzeughalter in einer definierten Lage festgehalten werden. Dies kann über zwei Anlageflächen zum Werkzeughalter erfolgen. Dabei müssen die Anlageflächen aber nicht parallel sein. Wichtig ist, dass eine eindeutige Positionierung des Nutensteins zum Werkzeughalter erfolgt. Dies kann über Stiftverbindungen, Zapfen, eine Anlagefläche und eine Schraube, die durch eine nicht orthogonale Bohrung geht, oder viele andere Lösungen erreicht werden. Wichtig ist dabei, dass die mindestens eine notwendige Anlagefläche des Nutensteins letztendlich parallel zu einer im Werkzeugträger vorhandenen Nut ist.

Im Zusammenhang mit der Erfindung sind bei allen Ausführungsbeispielen der oder die Nutensteine in eine Nut oder mehrere Nuten des Werkzeughalters eingesetzt. Der in eingesetztem Zustand über die Kontaktfläche des Werkzeughalters hinausragende Abschnitt des oder der Nutensteine wird von einer oder mehreren Nuten des Werkzeugträgers aufgenommen. Dadurch wird das im Werkzeughalter eingespannte Werkzeug exakt und reproduzierbar relativ zu dem Werkzeugträger positioniert. Natürlich ist auch die Umkehrung davon möglich. Dann werden die Nutensteine im Werkzeugträger befestigt und greifen in eine oder mehrere Nuten des Werkzeughalters ein. Auch hierfür wird Schutz beansprucht.

Durch den Schlitz, der nicht bis zur Grundfläche des Nutensteins reicht, wird der Nutenstein in einen steifen ersten Abschnitt sowie einen elastisch federnden zweiten Abschnitt unterteilt. Die Grundfläche gehört zu dem steifen Teil des Nutensteins. Dieser steife Teil wird in aller Regel in eine Nut eines Werkzeughalters eingepresst, so dass eine eindeutige und sehr belastbare Fixierung des Nutensteins im Werkzeughalter gewährleistet ist. Der geschlitzte und daher elastisch federnde zweite Abschnitt des Nutensteins ragt über eine Kontaktfläche des Werkzeughalters hinaus und wird in eine Nut eines Werkzeugträgers, der an einer Werkzeugmaschine befestigt ist, eingeführt.

Durch die partielle Elastizität des erfindungsgemäßen Nutensteins ist gewährleistet, dass zumindest eine der beiden Anlageflächen des Nutensteins federnd gegen eine Seitenwand der Nut in der Spannfläche des Werkzeugträgers gepresst wird. Dadurch ergibt sich eine sehr gute Wiederholgenauigkeit beim Einsetzen des Werkzeughalters in den Werkzeugträger bei gleichzeitig leichter Montierbarkeit bzw. Demontierbarkeit eines erfindungsgemäßen Werkzeughalters.

Wenn nämlich der gesamte Nutenstein als massiver Körper ausgeführt wird, dann muss entweder der Nutenstein mit Spiel montiert werden oder es muss eine sehr große Kraft aufgebracht werden, um die Nutensteine in die Nuten des Werkzeugträgers hineinzupressen. Beide Effekte sind unerwünscht, weil sie erstens die Reproduzierbarkeit verringern und außerdem in der Praxis zu Störungen des Betriebsablaufs führen.

Eine besonders vorteilhafte Ausgestaltung der Erfindung sieht vor, dass eine Längsachse der Durchgangsbohrung durch den Schlitz geht. Dadurch ist es möglich, den Kopf einer Befestigungsschraube zum Aufspreizen des federnden Teils des Nutensteins einzusetzen. Dies gilt vor allem dann, wenn der Schraubenkopf der Befestigungsschraube kegelstumpfförmig ausgebildet ist und in einer Durchgangsbohrung des Nutensteins ein entsprechend geformter kegelstumpfförmiger Abschnitt vorhanden ist.

Durch mehr oder minder tiefes Eindrehen der Befestigungsschraube wird im Ergebnis der einteilige Nutenstein aufgespreizt und dadurch der Werkzeughalter in seiner Position relativ zu den Nutensteinen eingestellt. Außerdem wird die Federsteifigkeit des elastischen Teils durch den auf beiden Seiten der Nut abgestützten Schraubenkopf überproportional erhöht.

Dadurch ist es möglich, die trotz einer hochpräzisen Fertigung auftretenden Streuungen zwischen baugleichen Werkzeughaltern einer Serie, auszugleichen. Dabei ist es ausreichend, wenn der erfindungsgemäße Nutenstein das Einstellen beziehungsweise Korrigieren der Position des Werkzeughalters um wenige Hundertstel Millimeter ermöglicht.

Alternativ ist es auch möglich, dass die Durchgangsbohrung zwischen einer von dem Schlitz aufgespannten Ebene und einer der Anlageflächen liegt. Dadurch wird der federnde Teil des erfindungsgemäßen Nutensteins nicht von der Befestigungsschraube bzw. der Durchgangsbohrung durchdrungen, so dass sich die Federwirkung voll entfalten kann.

In weiterer vorteilhafter Ausgestaltung der Erfindung ist an einer der Anlageflächen ein Absatz ausgebildet, der seitlich über die Anlagefläche hinausragt. Dieser Absatz ist bevorzugt an der federnd ausgebildeten Anlagefläche des erfindungsgemäßen Nutensteins vorhanden und ragt, wenn der Nutenstein in der Nut eines erfindungsgemäßen Werkzeughalters eingesetzt ist, etwas über die Kontaktfläche des Werkzeughalters hinaus.

Der Absatz bildet zusammen mit dem federnden Teil des Nutensteins einen Winkelhebel. Wenn der Absatz auf die Spannfläche des Werkzeugträgers bei der Montage des erfindungsgemäßen Werkzeughalters gedrückt wird, hebelt er den federnden Teil des Nutensteins seitlich nach außen gegen eine Seitenwand der Nut im Werkzeugträger. Daraus resultiert eine leichte Montierbarkeit des Werkzeughalters, weil der Nutenstein mit etwas Spiel bzw. einer Übergangspassung in die Nut des Werkzeugträgers eingeführt werden kann. Erst wenn der Werkzeughalter mit seiner Kontaktfläche gegen die Spannfläche des Werkzeugträgers gepresst wird, stellt sich eine Verspannung zwischen dem Nutenstein und den Anlageflächen der Nut ein.

In weiterer vorteilhafter Ausgestaltung der Erfindung ist vorgesehen, dass an einer der Anlageflächen im Bereich der Grundfläche mindestens ein Vorsprung ausgebildet ist, der in der Praxis in weniger als 0,3 Millimeter über die Anlagefläche hinausragt. Dieser Vorsprung dient dazu, eine eindeutige und vorhersehbare Anlagesituation zwischen den Anlageflächen des Nutensteins und den Anlageflächen der entsprechend geformten Nuten im Werkzeughalter zu erreichen.

Der erfindungsgemäße Vorsprung führt nämlich zu einer kleinen teilweise plastischen Verformung entweder des Nutensteins oder der Nut im Werkzeughalter, so dass der Nutenstein mit seiner gegenüber liegenden Anlagefläche fest und vorhersehbar gegen die entsprechende Seitenwand der Nut des Werkzeughalters gepresst wird. Dadurch werden die Positioniergenauigkeit und die Wiederholgenauigkeit verbessert, obwohl die Toleranzanforderungen für die Herstellung des erfindungsgemäßen Nutensteins bzw. der Nutbreite in dem Werkzeughalter vergleichsweise gering sind.

Dabei weist eine Kontaktfläche des Werkzeughalters eine oder bevorzugt zwei orthogonal zueinander verlaufende Nuten auf. In dem Nutgrund dieser Nuten ist mindestens eine Gewindebohrung vorhanden. In diese Gewindebohrung kann eine Befestigungsschraube, die zuvor durch die Durchgangsbohrung in den Nutenstein gesteckt wurde, eingedreht werden. Dadurch wird der Nutenstein in der Nut des Werkzeughalters befestigt. Diese Befestigungsschraube kann auch zum Spreizen des Nutensteins verwendet werden.

Dazu ist es vorteilhaft, wenn die mindestens eine Gewindebohrung außermittig in der Nut positioniert ist.

Dabei können die Gewindebohrungen auf der gleichen Seite einer Symmetrieachse der Nut oder auf entgegengesetzten Seiten der Symmetrieachse positioniert sein. Wenn die Gewindebohrungen auf der gleichen Seite einer Symmetrieachse der Nut angeordnet sind, dann lässt sich der Werkzeugträger durch gleichmäßiges Anziehen der Befestigungsschrauben in einer Richtung orthogonal zur Längsachse der Nut verschieben. Durch einseitiges oder gegensinniges Anziehen bzw. Lösen der Befestigungsschrauben lässt sich eine Drehbewegung des Werkzeughalters erreichen.

Die Ergebnisse dieser Justierung können noch weiter verbessert werden, wenn noch eine Vorspannung erzeugt wird, die den Werkzeughalter mit Nutenstein gegen die zur Positionierung dienende Seitenwand der Nut im Werkzeugträger drückt. Dies ist erfindungsgemäß zum Beispiel durch doppelt geschlitzte Nutensteine möglich. Dabei befindet sich der für die Einstellung/Justierung zuständige Schlitz im Wesentlichen im ersten Abschnitt des Nutensteins, während der für die Federung zuständige Schlitz im Wesentlichen im zweiten Abschnitt des Nutensteins angeordnet ist. Die Vorspannung kann alternativ auch über zusätzliche Federelemente z.B. ein O-Ring am Schaft eines VDI-Werkzeughalters, wobei sich der O-Ring in einer exzentrisch zur Mittelachse des Schafts angeordneten Nut befindet. Durch die daraus resultierende Exzentrizität de O-Rings wird eine zusätzliche Federkraft und definierte Vorspannung erzeugt.

Wenn die Gewindebohrungen auf entgegengesetzten Seiten der Symmetrieachsen positioniert sind, dann lässt sich sowohl eine Drehung als auch eine Verschiebung des Werkzeughalters durch das Anziehen / Lösen der Befestigungsschrauben erreichen. Beide Varianten sind mit den gleichen Herstellungskosten und identischen Nutensteinen realisierbar, so dass das Bohrbild entsprechend den Anforderungen des konkreten Anwendungsfalls ausgewählt werden kann.

In weiterer vorteilhafter Ausgestaltung der Erfindung ist vorgesehen, dass die mindestens eine Nut an einer Anlagefläche gestuft ausgebildet ist, so dass sich eine Tasche bildet, die zur Aufnahme beispielsweise eines seitlichen Absatzes gemäß Anspruch 5 der anhängigen Patentanmeldung dient.

Zur Realisierung der erfindungsgemäßen Schnittstelle zwischen einem Werkzeugträger und einem Werkzeughalter ist ein Werkzeugträger erforderlich mit einer Spannfläche, wobei in der Spannfläche mindestens eine Nut, bevorzugt zwei orthogonal zueinander angeordnete Nuten ausgebildet sind. Die konstruktiven Merkmale dieses Werkzeugträgers sind in den Ansprüchen 17 bis 20 beansprucht.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

### Zeichnung

Es zeigen:
Figur 1a ein erstes Ausführungsbeispiel eines erfindungsgemäßen VDI-Revolvers mit Kegelfixierung mit angetriebenem Werkzeug in Winkelausführung,
Figur 1b ein zweites Ausführungsbeispiel eines erfindungsgemäßen BMT-Revolvers mit Kegelfixierung und Bohrerhalter in Winkelausführung,
Figur 2 zwei Isometrien eines Ausführungsbeispiels eines erfindungsgemäßen Werkzeughalters,
Figur 3 eine Draufsicht auf die Kontaktfläche eines erfindungsgemäßen Werkzeughalters zur Illustration eines ersten Bohrbilds der Befestigungsschrauben,
Figur 4 eine Draufsicht auf die Kontaktfläche eines erfindungsgemäßen Werkzeughalters zur Illustration eines zweiten Bohrbilds der Befestigungsschrauben,
Figur 5 eine stark vergrößerte teilweise freigeschnittene Darstellung der Einbausituation eines erfindungsgemäßen Nutensteins in einer Nut 23 des Werkzeughalters, wobei der Nutenstein durch eine Befestigungsschraube aufgespreizt werden kann,
Figur 6 verschiedene Ansichten des ersten Ausführungsbeispiels des erfindungsgemäßen Nutensteins,
Figur 7 ein weiteres Ausführungsbeispiel eines erfindungsgemäßen Nutensteins,
Figur 8 eine vergrößerte und teilweise freigeschnittene Darstellung der Einbausituation eines weiteren Ausführungsbeispiels eines erfindungsgemäßen Nutensteins in einem Werkzeughalter,
Figur 9 der zugehörige Nutenstein in verschiedenen Ansichten,
Figur 10 eine weitere Einbausituation eines dritten Ausführungsbeispiels eines erfindungsgemäßen Nutensteins in einem Werkzeughalter und
Figur 11 ein weiteres Ausführungsbeispiel eines erfindungsgemäßen Nutensteins.

### Beschreibung der Ausführungsbeispiele

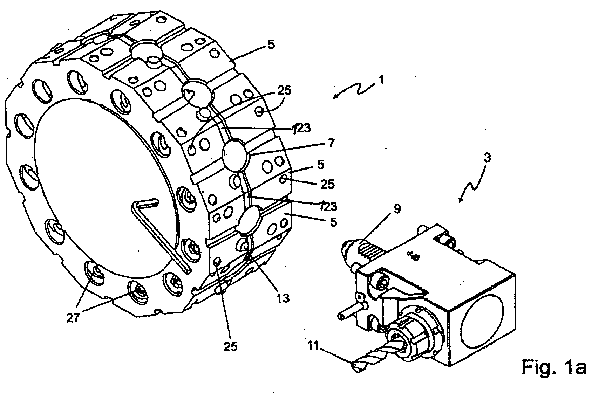

In Figur 1a sind ein erstes Ausführungsbeispiel eines erfindungsgemäßen Werkzeugträgers 1 sowie ein zugehöriger erfindungsgemäßer Werkzeughalter 3 in Winkelausführung in einer Isometrie dargestellt. Außer den erfindungsgemäßen Werkzeughaltern 3 können in den Werkzeugträger 1 auch herkömmliche Werkzeughalter nach DIN ISO 10889-1 und ff (nicht dargestellt) eingesetzt werden. Der Werkzeugträger 1 ist als sogenannter Sternrevolver ausgeführt und weist an seinem Außenumfang eine Vielzahl ebener Spannflächen 5 auf. Etwa in der Mitte der Spannflächen 5 ist eine Aufnahmebohrung 7 ausgebildet, die zur Aufnahme eines Zylinderschafts 9 des Werkzeugträgers 3 dient. Es gibt auch andere Revolveranordnungen, sogenannte Scheibenrevolver, bei denen sich die Werkzeuge auf der Planfläche befinden. Auch bei diesen Scheibenrevolvern ist die Erfindung einsetzbar.

Der Werkzeugträger 3 ist im dargestellten Ausführungsbeispiel mit einem Spiralbohrer 11 bestückt und wird mit dem Zylinderschaft 9 in die Aufnahmebohrung 7 des Werkzeugträgers 1 eingesetzt. Über den Zylinderschaft 9 erfolgt auch der Antrieb des Spiralbohrers 11 in an sich bekannter Weise. Anhand dieser Konstellation wird besonders deutlich, wie wichtig die genaue und reproduzierbare Positionierung des Werkzeughalters 3 in dem Werkzeugträger 1 ist, um eine gleichbleibend hohe Fertigungsqualität zu erreichen. Außerdem wird deutlich, dass die Vorschubkraft parallel und versetzt zur Spannfläche 5 in den Werkzeughalter 3 eingeleitet wird und von diesem über die erfindungsgemäße Schnittstelle auf den Werkzeugträger 1 übertragen werden muss.

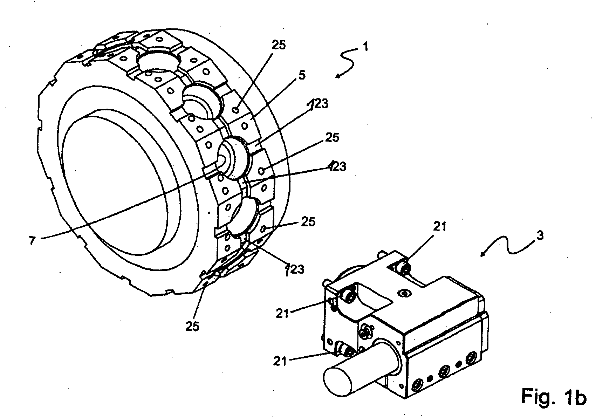

Um den Werkzeughalter 3 an dem Werkzeugträger 1 zu befestigen, sind an der in Figur 1 a linken Stirnseite des Werkzeugträgers 1 Schraubenköpfe 27 sichtbar, die eine auf den Zylinderschaft 9 des Werkzeughalters 3 wirkende Klemmeinrichtung betätigen. Diese Klemmeinrichtungen werden über einen Sechskant-Schlüssel betätigt, der in die Schraubenköpfe 27 eingesetzt werden kann. Zur Klemmung des Werkzeughalters 3 in dem Werkzeugträger 1 ist an dem Zylinderschaft 9 eine Verzahnung 15 (siehe Figur 1a) ausgebildet, wie sie in der DIN ISO 10889-1 definiert wird.

In der Spannfläche 5 ist neben der Aufnahmebohrung 7 noch ein Anschluss 13 für Kühlschmiermittel ausgebildet, der dazu dient, Kühlschmiermittel in den Werkzeughalter 3 und an das in dem Werkzeughalter 3 eingespannte Werkzeug zu bringen.

Zusätzlich zu der ebenen Spannfläche 5, der Aufnahmebohrung 7 und dem Zylinderschaft 9, die aus der DIN ISO 10889-1 bekannt sind, sind bei dem in Figur 1 a dargestellten Revolver noch Innengewinde 25 und erfindungsgemäße Nuten 123 ausgebildet.

Die Nuten sind bei dem dargestellten Ausführungsbeispiel rechtwinklig zueinander angeordnet (Kreuznut). Ihr Schnittpunkt fällt mit dem Mittelpunkt der Aufnahmebohrung 7 zusammen. Die erfindungsgemäßen Nutensteine können auch eingesetzt werden, wenn nur eine Nut der Kreuznut verwendet wird oder der Revolver 1 nur eine Nut 123 in jeder Spannfläche 5 aufweist. In diesen Fällen übernimmt der Zylinderschaft 9 des Werkzeughalters 3 in Verbindung mit der Aufnahmebohrung 7 des Werkzeugträgers 1 die Positionierung des Werkzeughalters 3 und der oder die erfindungsgemäßen Nutensteine bestimmen die Winkellage des Werkzeughalters 3.

Dabei kann man sowohl die in Umfangsrichtung des Revolvers verlaufende Nut oder die rechtwinklig dazu verlaufende Nut nutzen.

Ein Vorteil gegenüber der sogenannten W-Verzahnung der Fa. INDEX ist die Winkeleinstellbarkeit über den Nutenstein, die wesentlich einfachere Herstellung, weil die in Umfangsrichtung des Revolvers verlaufende Nut 123 durch einen Drehvorgang hergestellt werden kann und nicht geschliffen werden muss.

Wenn die Positionierung über die Kreuznut und den Zylinderschaft 9 erfolgt, muss konstruktiv festgelegt werden, ob die Positionierung über den eingespannten Zylinderschaft 9 oder die zwei Nutensteine erfolgt.

Alternativ kann man bei vorhandener Kreuznut und Spannung über die Verzahnung nach DIN ISO 10889-1 nur eine Nut 123 nutzen. Bei Werkzeughaltern, die über die Befestigungsgewinde 25 und nicht über die Verzahnung 15 im Zylinderschaft 9 gespannt werden, kann die Kreuznut ohne Überbestimmung durch den Zylinderschaft 9 zur Ausrichtung und Positionierung genutzt werden.

Die Nuten 23 wirken mit in Figur 1a nicht sichtbaren erfindungsgemäßen Nutensteinen des Werkzeughalters 3 in erfindungsgemäßer Weise zusammen und bewirken eine exakte, einstellbare und sehr gut reproduzierbare Positionierung des Werkzeughalters 3.

Die Befestigungsgewinde 25 können zur zusätzlichen Fixierung des Werkzeughalters 3 auf dem Werkzeugträger 1 dienen. Sie können aber auch als alleinige Befestigung des Werkzeughalters 3 auf dem Werkzeugträger 1 eingesetzt werden.

Ein wichtiger Begriff zur Beschreibung der Qualität der Schnittstelle zwischen Werkzeugträger 1 und Werkzeughalter 3 ist die Wiederholgenauigkeit beim mehrfachen Einsetzen eines Werkzeughalters 3 in den Werkzeugträger 1. Die VDI-Schnittstelle nach DIN ISO 10889-1 erreicht eine Wiederholgenauigkeit von etwa 0,05 Millimetern, was bei vielen, vor allem hochwertigen, Werkstücken nicht ausreichend ist und zeitaufwändige und damit teuere Kompensationen in der Steuerung der zugehörigen Werkzeugmaschine erforderlich macht.

Die erfindungsgemäße Schnittstelle ermöglicht eine Wiederholgenauigkeit von etwa 0,005 Millimetern (5 µm) und ist zudem einstellbar, so dass die auch bei einer hochpräzisen Fertigung auftretenden Fertigungstoleranzen von etwa 1/100 mm durch eine Voreinstellung der Nutensteine ausgeglichen werden können.

In der Figur 1b ist ein zweites Ausführungsbeispiel eines erfindungsgemäß weitergebildeten BMT-Revolvers 1 dargestellt bei dem der Werkzeughalter 3 mittels Befestigungsschrauben 21, die in die Befestigungsgewinde 25 eingedreht werden, an dem Revolver 1 befestigt werden. Auch hier erfolgt die Positionierung wieder über die mindestens eine erfindungsgemäße Nut 123 und nicht dargestellte erfindungsgemäße Nutensteine. Dabei können in jeder Spannfläche 5 eine Nut 123 oder zwei Nuten 123, die als Kreuznut ausgebildet sein können, vorgesehen sein.

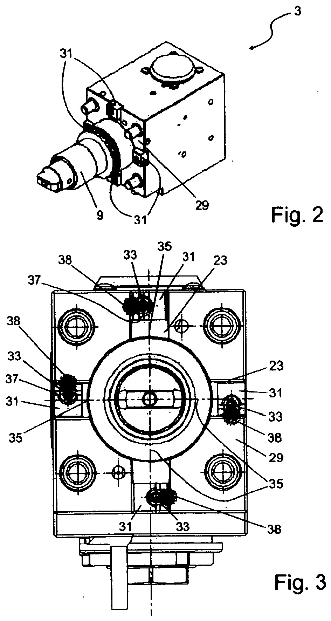

In Figur 2 ist der Zylinderschaft 9 des Werkzeughalters 3 besser als in den Figuren 1a und 1b zu sehen. Außerdem ist eine Kontaktfläche 29, mit der der Werkzeughalter 3 gegen die Spannfläche 5 des Werkzeughalters 1 (siehe Figur 1) gezogen wird, sichtbar. In dieser Kontaktfläche 29 sind bei dem dargestellten Ausführungsbeispiel zwei kreuzförmig angeordnete Nuten 23 eingearbeitet. In diesen Nuten 23 sind insgesamt vier erfindungsgemäße Nutensteine 31 eingesetzt und mit Befestigungsschrauben 33 gesichert.

Dabei können in jeder Kontaktfläche 29 eine Nut 23 oder zwei Nuten 23, die als Kreuznut ausgebildet sein können, vorgesehen sein.

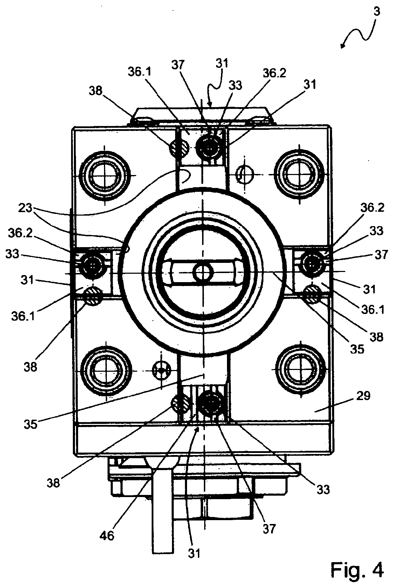

Anhand der Figuren 3 und 4 werden nachfolgend unter anderem die verschiedenen Einsatzmöglichkeiten der erfindungsgemäßen Nutensteine 31 zusammen mit der oder den Nuten 23 erläutert.

Figur 3 zeigt eine Draufsicht auf die Kontaktfläche 29 des Werkzeughalters 3. In dieser gegenüber der Figur 2 vergrößerten Darstellung sind die Nuten 23, die Nutensteine 31 und die Befestigungs- bzw. Spannschrauben 33 gut zu erkennen.

Ebenfalls gut zu erkennen sind mindestens ein Schlitz 37 in jedem Nutenstein 31. Die Schlitze 37 teilen den über die Kontaktfläche 29 hinausragenden zweiten Abschnitt der Nutensteine 31 in einen starren Teil 36.1 und einen federnden Teil 36.2. Aus Gründen der Übersichtlichkeit sind die Bezugszeichen 36.1 und 36.2 nur bei einem Nutenstein 31 eingetragen.

In dieser Darstellung wird deutlich, dass die beiden in einer vom Zylinderschaft 9 unterbrochenen Nut 23 angeordneten Nutensteine 31 so positioniert sind, dass die Befestigungsschrauben 33 auf entgegengesetzten Seiten einer Symmetrieachse oder Längsachse der Nuten 23 angeordnet sind.

Bei der in Figur 3 von oben nach unten verlaufenden Nut 23 ist die Befestigungsschraube 33 des oberen Nutensteins 31 links der Symmetrieachse 35 der Nut 23, während die Befestigungsschraube 33 des in Figur 3 unteren Nutensteins 31 rechts der Symmetrieachse 35 angeordnet ist. Entsprechendes gilt auch für die in Figur 3 waagerecht verlaufende Nut 23.

Wenn der Werkzeughalter 3 auf einem Werkzeugträger 1 montiert wird, dann erfolgen die Ausrichtung und Positionierung der Werkzeughalters 3 über Kontaktpunkte 38 an den federnden Teilen 36.2 der Nutensteine 31. Diese Kontaktpunkte 38 liegen an den Seitenwänden der Nut 23 im Werkzeugträger 1 an.

Die starren Teile 36.1 der Nutensteine 31 haben keinen Kontakt zu der Nut 23 im Werkzeugträger 1, um definierte Kontaktstellen zwischen Nutensteinen 31 und den Nuten 23 des Werkzeugträgers 1 zu erhalten. Außerdem muss dadurch nur eine Seitenwand der Nuten 23 im Werkzeugträger 1 mit höchster Präzision gefertigt werden.

Bei dem dargestellten Ausführungsbeispiel erfolgt die Ausrichtung über alle vier (4) Nutensteine 31. Jedoch ist jetzt nur eine Berührung (siehe die Kontaktpunkte 38) zwischen den flexiblen Teilen 36.2 der Nutensteine 31 und den Seitenwänden der Nuten 23 im Werkzeugträger 1. Die Verspannung erfolgt über die erfindungsgemäße und spezielle Anordnung der Nutensteine 31. Wie bereits oben erwähnt, ist die den Kontaktpunkten 38 gegenüberliegende Seite ohne Kontakt mit den Seitenwänden der Nuten 23 im Werkzeugträger 1. Die federnden Teile 36.2 der Nutensteine 31 haben zwei Aufgaben. Erstens die vom Monteur durch entsprechendes anziehen der Befestigungsschrauben 33 einstellbare Lage der Anlagefläche des federnden Teils 36.2, um den Werkzeughalter in seiner Lage relativ zum Werkzeugträger 1 hinsichtlich Winkel und lineare Verschiebung einzustellen.

Zweitens die notwendige Elastizität zu erzeugen, die zum Ausgleich der unvermeidlichen Maßabweichungen von Werkzeughalterplatz zu Werkzeughalterplatz notwendig ist. Es versteht sich von selbst, dass die federnden Teile 36.2 unter anderem auch wegen der seitlichen Abstützung durch die Befestigungsschrauben 33 sehr steife Federn darstellen.

Alternativ, aber in Figur 3 nicht dargestellt, werden mindestens drei Nutensteine 31 in der Kreuznut so angeordnet, dass die Anlagefläche des starren Teils 36.1 von zwei Nutensteinen 31 die Winkelausrichtung übernehmen. Der dritte und der optionale vierte Nutenstein 31 übernehmen dann den Längsanschlag entlang der Winkelausrichtung. Die federnden Teile 36.2 an den Nutensteinen 31 sorgen in diesem Fall dafür, dass sich der Werkzeughalter 3 über die starren Teile 36.1 Nutensteine 31 an den vorgesehen Anlageflächen im Werkzeugträger 1 ausrichtet.

In Figur 4 ist eine ähnliche Ansicht wie in Figur 3 dargestellt. Allerdings ist bei diesem Ausführungsbeispiel das Bohrbild der die Anordnung der Befestigungsschrauben 33 anders. Hier sind die Befestigungsschrauben der zu einer Nut angeordneten Nutenstein 31 auf der gleichen Seite der Längsachse bzw. der Symmetrieachse der Nut angeordnet.

Auch bei diesem Bohrbild sind zwei Fälle zu unterscheiden.

Fall 1: Wenn nur eine Nut 23 vorhanden ist, dann wird der erfindungsgemäße Nutenstein 31 so ausgeführt, dass der starre Teil 36.2 an der Seitenwand der Nut 23 (nicht dargestellt in Figur 4) des Werkzeugträgers 1 zur Anlage kommt und die Lagebestimmung übernimmt (siehe die eingezeichneten Kontaktpunkte 38). Die Federwirkung der federnden Teile 36.2 der Nutenstein 31 sorgt dafür, dass der Werkzeughalter 3 sich über die Nutwand und den festen Teil 36.1 der Nutensteine 31 ausrichten muss.

Wenn der Nutenstein 31 kurz gebaut ist, braucht man noch einen zweiten Fixpunkt, z.B. den Zylinderschaft 9 beim VDI Halter, um eine eindeutige Winkellage zu erreichen. Der Zylinderschaft 9 würde den Halter dann üblicherweise auch noch in der anderen Ebenenausrichtung festhalten.

Bei zwei voneinander beabstandeten Nutensteinen 31 in einer Nut übernehmen die zwei Nutensteine 31 die Winkelausrichtung und man muss den Werkzeughalter 3 in der Ebene nur noch über einen Zylinderschaft 9 oder einen anderen Stützpunkt, zum Beispiel in Form eines dritten oder vierten Nutensteins 31 am Verschieben entlang der Winkelausrichtung in der Nut 23 hindern.

Bei der Ausführung mit zwei beabstandeten Nutensteinen ist nur eine "durchgehende" als Anlagefläche dienende Seitenwand in der Nut 23 im Werkzeugträger 1 zur genauen Ausrichtung notwendig. Dabei ist es unerheblich, ob die Anlagefläche beziehungsweise die Nut 23 durch eine Aufnahmebohrung 7 für einen Zylinderschaft 9 unterbrochen ist.)

Die den Kontaktpunkten 38 gegenüberliegende Seitenwand der Nut 23 muss nicht in hoher Toleranzgüte hergestellt werden, da die Federwirkung des elastischen Teils 36.2 des Nutensteins 31 die Fertigungstoleranzen ausgleicht.

Beide Bohrbilder lassen sich mit dem gleichen Herstellungsaufwand und unter Verwendung identischer Nutensteine 31 realisieren, so dass je nach den Randbedingungen des Einzelfalls das eine oder das andere Bohrbild eingesetzt werden kann.

Das in Figur 4 dargestellte Bohrbild ermöglicht auf besonders einfache Weise eine Parallelverschiebung des Werkzeughalters 3. Außerdem ist es zusätzlich möglich, eine Drehbewegung des Werkzeughalters 3 durch ungleichmäßiges Anziehen der Befestigungsschrauben 33 zu realisieren. Um zu einer Vorspannung in den Nuten zu kommen, ist eine zusätzliche Federung (O-Ring, doppelt geschlitzten Nutensteinen etc. vorteilhaft.

Beispielhaft weist deshalb der in Figur 4 unterste Nutenstein einen zweiten Schlitz 46 auf.

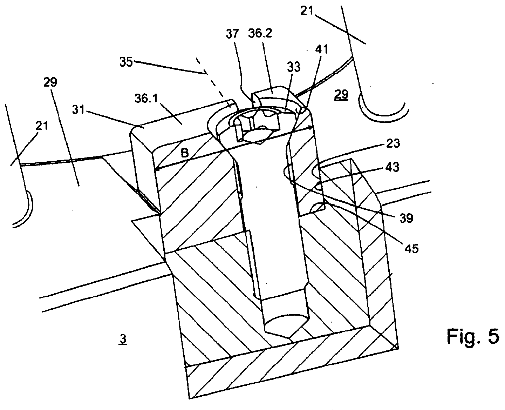

In der Figur 5 ist das Ausführungsbeispiel gemäß Figur 3 oder 4 in einer Isometrie stark vergrößert und teilweise freigeschnitten dargestellt. In dieser Darstellung wird deutlich, dass der Nutenstein 31 geschlitzt ist, wobei der Schlitz 37 außerhalb einer Symmetrieebene des Nutensteins 31 liegt. Durch den Schlitz 37 wird der über die Kontaktfläche 29 ragende obere Abschnitt des Nutensteins 31 in einen festen Teil, der links der Befestigungsschraube 33 dargestellt ist, und einen federnden Teil, der rechts der Befestigungsschraube 33 in Figur 5 dargestellt ist, unterteilt.

Durch den Schlitz 37 geht eine Durchgangsbohrung 39, die an dem in Figur 5 oberen Ende kegelstumpfförmig ausgebildet ist. Der kegelstumpfförmige Abschnitt hat das Bezugszeichen 41.

Die Nut 23 hat zwei Seitenwände 43 und einen Nutgrund 45. In dem Nutgrund 45 ist ein Innengewinde (ohne Bezugszeichen) ausgebildet, in welches die Befestigungsschraube 33 eingedreht ist. Aus der Figur 5 ist leicht nachvollziehbar, dass durch tieferes Eindrehen der Befestigungsschraube 33 der rechts des Schlitzes 37 befindliche Teil des Nutensteins 31, der über die Kontaktfläche 29 hinausragt, seitlich nach außen gespreizt wird. Dadurch wird die Breite B des Nutensteins 31 verändert. Somit ist durch das mehr oder weniger tiefe Eindrehen der Befestigungsschraube 33 eine Positionierung des Werkzeughalters 3 relativ zu dem über die Kontaktfläche 29 hinausragenden Teil des Nutensteins 31 möglich.

Der über die Kontaktfläche 29 hinausragende Teil des Nutensteins 31 wird, wie im Zusammenhang mit den Figuren 1a und 1b erläutert, in entsprechende Nuten 23 in der Spannfläche 5 eines Werkzeugträgers 1 eingesetzt. Infolge dessen kann durch das mehr oder weniger weite Aufspreizen eines oder mehrerer Nutensteine 31 die Position des Werkzeughalters 3 relativ zu dem Werkzeugträger 1 eingestellt werden.

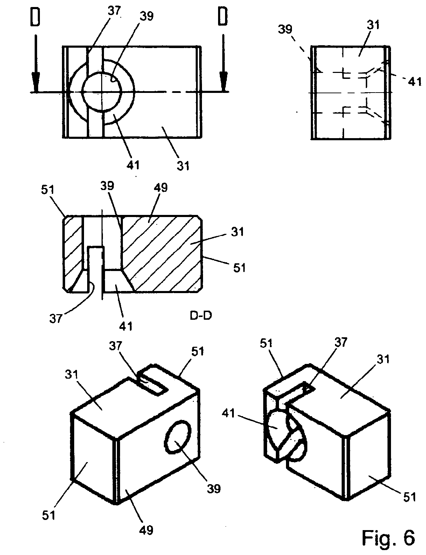

In Figur 6 ist der in Figur 5 in eingebautem Zustand dargestellte Nutenstein in verschiedenen Ansichten dargestellt. Aus diesen Ansichten ergeben sich die konstruktiven Einzelheiten des erfindungsgemäßen Nutensteins 31.

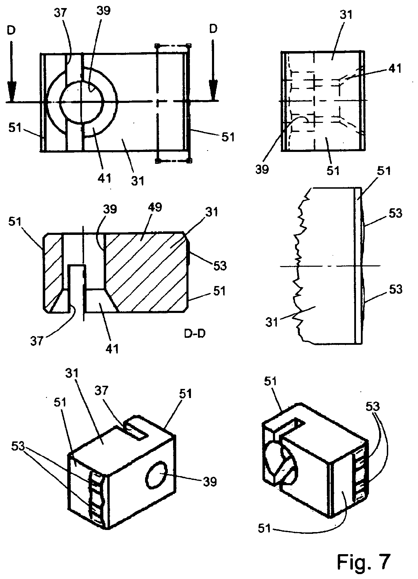

Aus diesen verschiedenen Ansichten der Figur 6 ist die Geometrie des erfindungsgemäßen Nutensteins 31 als prismatischer Körper mit rechteckigem Querschnitt gut zu erkennen. Dabei weist der Nutenstein 31 eine Grundfläche 49 und zwei parallel zueinander angeordnete Anlageflächen 51 auf. Der Schlitz 37 verläuft bei diesem Ausführungsbeispiel parallel zu den Anlageflächen 51. In dieser Darstellung ist gut zu erkennen, dass der Mittelpunkt der Durchgangsbohrung 39 nicht genau in der Mitte des Schlitzes 37, sondern seitlich versetzt angeordnet ist. Dadurch ergibt sich eine bessere Spreizwirkung der Befestigungsschraube 33 (nicht dargestellt in Figuren 6 und 7).

Das Ausführungsbeispiel gemäß Figur 7 entspricht weitestgehend dem Ausführungsbeispiel der Figur 6. Allerdings sind an einer Anlagefläche 51 im Bereich der Grundfläche 49 zwei Vorsprünge 53 ausgebildet, die etwas über die Anlagefläche 51 hinausragen. Durch die Vorsprünge 53 wird eine definierte elastische, teilweise aber auch plastische Verformung der Nut 23 im Werkzeughalter 3 verursacht. Außerdem wird der Nutenstein 31 mit einer relativ großen und präzise vorhersagbaren Kraft gegen die den Vorsprüngen 53 gegenüberliegende Anlagefläche 51 gepresst. Da diese Anlagefläche 51 eben ist und sich dort auch der federnd ausgebildete Teil des Nutensteins 31 befindet, ist wird dadurch eine weitere Steigerung der Reproduzierbarkeit und der Genauigkeit, mit der der erfindungsgemäße Nutenstein 31 den Werkzeughalter 3 in einem Werkzeugträger 1 positioniert erreicht.

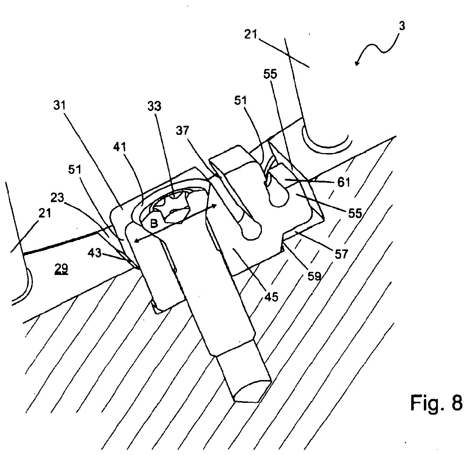

In Figur 8 ist ein weiteres Ausführungsbeispiel eines erfindungsgemäßen Nutensteins dargestellt. Bei diesem Ausführungsbeispiel ist ein Absatz 55 in dem Nutenstein 31 ausgebildet. Der Absatz 55 ragt seitlich über die rechts des Schlitzes 37 angeordnete Anlagefläche 51 hinaus. Der Nutgrund 45 der Nut 23 im Werkzeughalter 3 ist gestuft ausgebildet. Die Stufe 57 wirkt mit einer Schräge 59 im Bereich der Grundfläche 49 des Nutensteins 31 dergestalt zusammen, dass eine gewisse Verformung der Stufe 57 stattfindet, wenn die Befestigungsschraube 33 angezogen wird. Gleichzeitig ergibt sich dadurch eine definierte Kraft, welche den Nutenstein 31 in Figur 8 nach links gegen die dort befindliche Seitenwand 43 der Nut 23 presst. Dadurch ist eine definierte Position des Nutensteins 31 relativ zu der Nut 23 im Werkzeughalter 3 gegeben.

Der Absatz 55 endet etwas oberhalb der Kontaktfläche 29 des Werkzeughalters. An der engsten Stelle zwischen der Schräge 59 und dem unteren Ende des Schlitzes 37 bildet sich ein aufgrund der Elastizität des Werkstoffs (hochwertiger Stahl) des Nutensteins 31, ein federndes Gelenk für den aus dem Absatz 55 und der federnden Anlagefläche 51 gebildeten Winkelhebel aus.

Wenn nun also der Werkzeughalter 3 mit dem Nutenstein 31 in einen Werkzeugträger 1 eingesetzt wird, ist die Breite B des Nutensteins 31, der durch den Abstand der Anlageflächen 51 definiert ist, so bemessen, dass der Nutenstein 31 leicht spielbehaftet in die Nut 23 des Werkzeugträgers eingeführt werden kann. Kurz bevor die Kontaktfläche 29 des Werkzeugträgers auf der Spannfläche 5 des Werkzeugträgers aufliegt, berührt der Absatz 55 die Spannfläche 5. Wenn nun mithilfe der Befestigungsschrauben 21 der Werkzeughalter 3 auf die Spannfläche 5 des Werkzeugträgers 1 gezogen wird, dann schwenkt die in Figur 8 rechte Anlagefläche 51 nach rechts und wird gegen die entsprechende Seitenwand der Nut 23 im Werkzeugträger 1 gepresst.

Der Schlitz 37 verläuft bei diesem Ausführungsbeispiel schräggestellt relativ und parallel zu der Grundfläche 49 zu den Anlageflächen 51.

Durch dieses Ausführungsbeispiel ist es möglich, die Nutensteine 31 leicht spielbehaftet und mit geringer Kraft in die Nuten 23 des Werkzeugträgers 1 einzuführen und erst durch das Anziehen bzw. Festspannen des Werkzeughalters 3 mithilfe der Befestigungsschrauben 21 einen Querpresssitz zwischen dem Nutenstein 31 und den Nuten 23 im Werkzeugträger 1 herzustellen. Sobald die Befestigungsschrauben 21 wieder gelöst werden, baut sich die Spannung dieses Querpresssitzes ab und der Werkzeughalter 3 ist mit geringer Kraft wieder demontierbar.

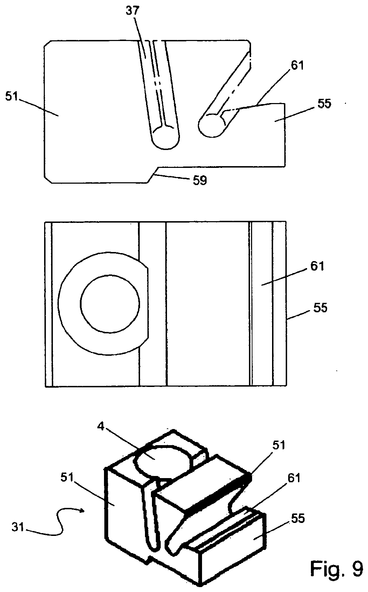

Figur 9 zeigt den Nutenstein 31 gemäß dem in Figur 8 dargestellten Ausführungsbeispiel in verschiedenen Ansichten.

In Figur 9 ist gut zu sehen, dass eine Angriffsfläche 61 an dem Absatz 55 in entspanntem Zustand leicht schräggestellt ist, so dass dann, wenn der Werkzeughalter 3 mit seiner Kontaktfläche 29 an der Spannfläche 5 des Werkzeugträgers 1 aufliegt, die Kraftangriffsfläche 61 ebenfalls flächig auf der Spannfläche 5 des Werkzeugträgers 1 aufliegt.

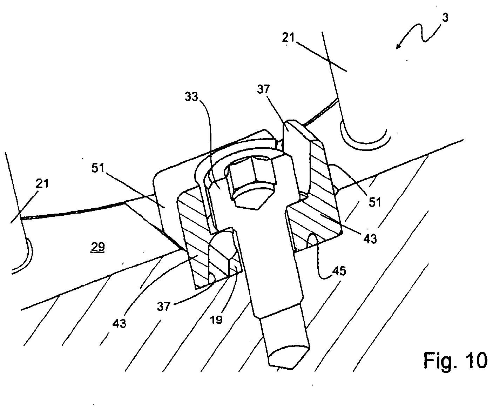

In Figur 10 ist ein weiteres Ausführungsbeispiel eines erfindungsgemäßen Nutensteins 31 dargestellt. Bei diesem Ausführungsbeispiel ist die Durchgangsbohrung 39 symmetrisch zu den Anlageflächen 51 ausgebildet und es gibt zwei Schlitze 37. Der eine Schlitz beginnt bzw. endet in der Grundfläche 49, während der andere Schlitz an der der Grundfläche 49 gegenüberliegenden Fläche und an der anderen Seite der Befestigungsschraube 33 angeordnet ist. Dadurch werden zwei elastische Bereiche des Nutensteins 31 gebildet. Der linke elastische Teil des Nutensteins 31 sorgt für eine federnde, das heißt spielfreie und definierte Aufnahme bzw. Positionierung des Nutensteins in der Nut 23 des Werkzeughalters 3 während der in Figur 10 rechts oben dargestellte federnde Teil des Nutensteins 31 eine entsprechend federnde und dennoch spielfreie in der Nut 23 des Werkzeugträgers 1 bewirkt.

Dieses Ausführungsbeispiel ist nicht einstellbar, erlaubt aber aufgrund der Flexibilität eine vergleichsweise kostengünstige und mit großen Toleranzen versehene Fertigung und hat eine sehr gute Wiederholgenauigkeit. Beide Schlitze können auch gemeinsam auf einer Seite des Nutensteines angeordnet sein.

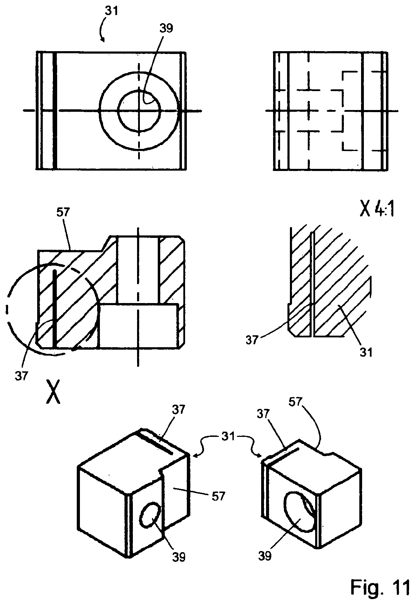

In Figur 11 ist ein weiteres Ausführungsbeispiel eines erfindungsgemäßen Nutensteins dargestellt. Dieses Ausführungsbeispiel kombiniert Merkmale der Ausführungsbeispiele gemäß Figur 8 und 9 sowie 10. Die Befestigung und Positionierung des Nutensteins 31 in der Nut 23 des Werkzeughalters 3 erfolgt gemäß der Ausführungsbeispiele der Figuren 8 und 9, während die federnde Aufnahme des Nutensteins 31 in der Nut des Werkzeugträgers 1 so erfolgt, wie bei dem Ausführungsbeispiel gemäß Figur 10.

## Patentansprüche

1. Kombination aus mindestens einem Nutenstein (31) und einem Werkzeughalter (3) für Werkzeuge, wobei der Werkzeughalter eine Kontaktfläche (29) umfasst, wobei in der Kontaktfläche (29) Mittel zur Befestigung des mindestens einen Nutensteins (31) vorgesehen sind, wobei die Mittel zur Befestigung des mindestens einen Nutensteins (31) mindestens eine Nut (23) und ein Innengewinde umfassen, wobei der mindestens eine Nutenstein (31) einen Grundkörper mit mindestens einer Anlagefläche (51) und einer Grundfläche (49) sowie eine die Grundfläche (49) durchdringende Durchgangsbohrung (39) aufweist und wobei der mindestens eine Nutenstein (31) in die mindestens eine Nut des Werkzeughalters so eingesetzt ist, dass ein Teil des mindestens einen Nutensteins (31) über die Kontaktfläche (29) hinausragt, wobei in dem in dem mindestens einen Nutenstein (31) ein Schlitz (37) ausgebildet ist, **dadurch gekennzeichnet, dass** ein Grund des Schlitzes (37) parallel zu der Grundfläche (49) verläuft, und dass der Schlitz (37) in der gleichen Richtung wie die mindestens eine Anlagefläche (51) verläuft und außermittig angeordnet ist.

2. Kombination aus mindestens einem Nutenstein (31) und einem Werkzeugträger (1) zur Aufnahme eines Werkzeughalters (3), wobei der Werkzeugträger eine Spannfläche (29) umfasst, wobei in der Spannfläche (5) Mittel zur Befestigung des mindestens einen Nutensteins (31) vorgesehen sind, wobei die Mittel zur Befestigung des mindestens einen Nutensteins (31) mindestens eine Nut (123) und ein Innengewinde umfassen, wobei der mindestens eine Nutenstein (31) einen Grundkörper mit mindestens einer Anlagefläche (51) und einer Grundfläche (49) sowie eine die Grundfläche (49) durchdringende Durchgangsbohrung (39) aufweist und wobei der mindestens eine Nutenstein (31) in die mindestens eine Nut des Werkzeugträgers (1) so eingesetzt ist, dass ein Teil des mindestens einen Nutensteins (31) über die Spannfläche (5) hinausragt, wobei in dem mindestens einen Nutenstein (31) ein Schlitz (37) ausgebildet ist, **dadurch gekennzeichnet, dass** ein Grund des Schlitzes (37) parallel zu der Grundfläche (49) verläuft, und dass der Schlitz (37) in der gleichen Richtung wie die mindestens eine Anlagefläche (51) verläuft und außermittig angeordnet ist.

3. Werkzeughalter oder Werkzeugträger nach Anspruch 1 oder 2, **dadurch gekennzeichnet, dass** zwei Nuten (23;123) in der Kontaktfläche (29) oder der Spannfläche (5) vorgesehen sind, und dass die zwei Nuten (23;123) orthogonal zueinander verlaufen.

4. Werkzeughalter oder Werkzeugträger nach einem der vorhergehenden Ansprüche, **dadurch gekennzeichnet, dass** in einem Nutgrund der mindestens einen Nut (23;123) mindestens eine Gewindebohrung vorhanden ist, die das Innengewinde der Mittel zur Befestigung bildet.

5. Werkzeughalter oder Werkzeugträger nach einem der vorhergehenden Ansprüche, **dadurch gekennzeichnet, dass** die mindestens eine Gewindebohrung zur Befestigung und/oder zum Spreizen eines Nutensteins (31) dient.

6. Werkzeughalter oder Werkzeugträger nach einem der vorhergehenden Ansprüche, **dadurch gekennzeichnet, dass** die mindestens eine Gewindebohrung außermittig in der Nut (23;123) positioniert ist.

7. Werkzeughalter oder Werkzeugträger nach Anspruch 6, **dadurch gekennzeichnet, dass** zwei Gewindebohrungen außermittig in der Nut (23;123) positioniert sind, und dass die Gewindebohrungen auf der gleichen Seite einer Symmetrieachse (35) der Nut (23;123) oder auf entgegengesetzten Seiten der Symmetrieachse (35) positioniert sind.

8. Werkzeughalter oder Werkzeugträger nach einem der vorhergehenden Ansprüche, **dadurch gekennzeichnet, dass** die mindestens eine Gewindebohrung nicht lotrecht auf der Kontaktfläche (29) des Werkzeughalters oder der Spannfläche (5) des Werkzeugträgers steht.

9. Werkzeughalter oder Werkzeugträger nach einem der vorhergehenden Ansprüche, **dadurch gekennzeichnet, dass** die mindestens eine Nut (23;123) gestuft ausgebildet ist, so dass oberhalb einer als Anlagefläche für einen oder mehrere Nutensteine (31) dienenden Teils einer Seitenwand der Nut (23;123) eine Tasche ausgebildet ist.

10. Werkzeughalter oder Werkzeugträger nach Anspruch 9, **dadurch gekennzeichnet, dass** die Tasche zur Aufnahme des an einer der Anlageflächen (51) des Nutensteins (31) ausgebildeten Absatzes (55) dient.

11. Werkzeughalter oder Werkzeugträger nach Anspruch nach Anspruch 10, **dadurch gekennzeichnet, dass** der Absatz (55) mit einer Angriffsfläche (61) über die Kontaktfläche (29) des Werkzeughalters (3) oder die Spannfläche (5) des Werkzeugträgers hinausragt, wenn der Nutenstein (31) in die Nut (23;123) eingesetzt ist.

12. Werkzeugträger nach einem der Ansprüche 2 bis 11 , **dadurch gekennzeichnet, dass** in der Spannfläche (5) eine Aufnahmebohrung (7) ausgebildet ist, und dass die Längsachse der Aufnahmebohrung (7) orthogonal zu der Spannfläche (5) verläuft.

13. Werkzeugträger nach einem der Ansprüche 2 bis 12, **dadurch gekennzeichnet, dass** in der Spannfläche (5) mehrere Befestigungsgewinde (25) vorhanden sind.

14. Werkzeughalter oder Werkzeugträger nach einem der vorhergehenden Ansprüche, **dadurch gekennzeichnet, dass** der Schlitz (37) des Nutensteins (31) parallel oder geneigt zu der mindestens einen Anlageflächen (51) und der Grundfläche (49) verläuft.

15. Werkzeughalter oder Werkzeugträger nach einem der vorhergehenden Ansprüche, **dadurch gekennzeichnet, dass** eine Längsachse der Durchgangsbohrung (39) des Nutensteins (31) zwischen einer von dem Schlitz (37) aufgespannten Ebene und einer der Anlageflächen (51) liegt.

16. Werkzeughalter oder Werkzeugträger nach einem der vorhergehenden Ansprüche, **dadurch gekennzeichnet, dass** die Durchgangsbohrung (39) an ihrem der Grundfläche (49) des Nutensteins (31) gegenüberliegenden Ende kegelstumpfförmig (41) ausgebildet ist.

17. Werkzeughalter oder Werkzeugträger nach einem der vorhergehenden Ansprüche, **dadurch gekennzeichnet, dass** an einer der Anlageflächen (51) des Nutensteins (31) ein Absatz (55) ausgebildet ist, und dass der Absatz (55) seitlich über die Anlagefläche (51) hinausragt.

18. Werkzeughalter oder Werkzeugträger nach einem der vorhergehenden Ansprüche, **dadurch gekennzeichnet, dass** an einer Anlagefläche (51) des Nutensteins (31) im Bereich der Grundfläche (49) mindestens ein Vorsprung (53) ausgebildet ist.

19. Werkzeughalter oder Werkzeugträger nach Anspruch 18, **dadurch gekennzeichnet, dass** der Vorsprung (53) um weniger als 0,3 mm, bevorzugt um 0,2 mm, über die Anlagefläche (51) hinausragt.

## Claims

1. Combination of at least one sliding block (31) and a tool holder for workpieces, wherein the tool holder comprises a contact surface (29), wherein in the contact surface (29) means for fastening the at least one sliding block (31) are provided, wherein the means for fastening the at least one sliding block (31) comprise at least one groove (23, 123) and an internal thread, wherein the sliding block (31) comprises a base member with at least a contact surface (51) and a base surface (49) as well as a through bore (39) penetrating the base surface (49) and wherein the at least one sliding block (31) is inserted into the at least one groove (23) of the tool holder such that a part of the sliding block (31) projects the contact surface (29), wherein in the at least one sliding block (31) a slot (37) is formed, **characterized in that** a bottom of the slot (37) extends parallel to the base surface (49), and that the slot (37) extends in the same direction as the at least one contact surface (51) and is arranged off-center.

2. Combination of at least one sliding block (31) and a tool carrier for receiving a tool holder (3), wherein the tool carrier comprises a clamping surface (5), wherein in the clamping surface (5) means for fastening the at least one sliding block (31) are provided, wherein the means for fastening the at least one sliding block (31) comprise at least one groove (123) and an internal thread, wherein the at least one sliding block (31) comprises a base member with at least a contact surface (51) and a base surface (49) as well as a through bore (39) penetrating the base surface (49) and wherein the at least one sliding block (31) is inserted into the at least one groove of the tool carrier (1) such that a part of the at least one sliding block (31) projects the clamping surface (5), wherein in the at least one sliding block (31) a slot (37) is formed, **characterized in that** a bottom of the slot (37) extends parallel to the base surface (49), and that the slot (37) extends in the same direction as the at least one contact surface (51) and is arranged off-center.

3. Tool holder or tool carrier according to claim 1 or 2, **characterized in that** two grooves (23, 123) are provided in the contact surface (29) or the clamping surface (5) and that the two grooves (23, 123) are extending orthogonally relative to each other.

4. Tool holder or tool carrier according to one of the preceding claims, **characterized in that** in a groove bottom of the at least one groove (23, 123) at least one threaded bore is present constituting the internal thread of the fastening means.

5. Tool holder or tool carrier according to one of the preceding claims, **characterized in that** the at least one threaded bore serves for fastening and/or spreading a sliding block (31).

6. Tool holder or tool carrier according to one of the preceding claims, **characterized in that** the at least one threaded bore is positioned off-center in the groove (23, 123).

7. Tool holder or tool carrier according to claim 6, **characterized in that** two threaded bores are positioned off-center in the groove (23, 123) and that the threaded bores are positioned on the same side of a symmetry axis (35) of the groove (23, 123) or opposite sides of the symmetry axis (35).

8. Tool holder or tool carrier according to one of the preceding claims, **characterized in that** the at least one threaded bore is not perpendicular to the contact surface (29) of the tool holder.

9. Tool holder or tool carrier according to one of the preceding claims, **characterized in that** the at least one groove (23, 123) is of a stepped configuration, so that a pocket is formed above a part of the sidewall of the groove (23, 123) that is configured as a contact surface for one or several sliding blocks (31).

10. Tool holder or tool carrier according to claim 9, **characterized in that** the pocket serves for receiving the shoulder (55) formed on one of the contact surfaces (51) of the sliding block (31).

11. Tool holder or tool carrier according to claim 10, **characterized in that** the shoulder (55) projects with an engagement surface (61) past the contact surface (29) of the tool holder (3) or the clamping surface (5) of the tool carrier, when the sliding block (31) is inserted into the groove (23, 123).

12. Tool carrier according to one of the claims 2 to 11, **characterized in that** in the clamping surface (5) a receiving bore (7) is formed and that the longitudinal axis of the receiving bore (7) extends orthogonally relative to the clamping surface (5).

13. Tool carrier according to one of the claims 2 to 12, **characterized in that** in the clamping surface (5) several fastening threads (25) are present.

14. Tool holder or tool carrier according to one of the preceding claims, **characterized in that** the slot (37) of the sliding block (31) extends parallel or at a slant relative to the at least one contact surface (51) and the base surface (49).

15. Tool holder or tool carrier according to one of the preceding claims, **characterized in that** a longitudinal axis of the through bore (39) of the sliding block (31) is positioned between a plane that is stretched by the slot (37) and one of the contact surfaces (51).

16. Tool holder or tool carrier according to one of the preceding claims, **characterized in that** the through bore (39) is embodied as truncated cone (41) at its end positioned opposite the base surface (49) of the sliding block (31).

17. Tool holder or tool carrier according to one of the preceding claims, **characterized in that** on one of the contact surfaces (51) of the sliding block (31) a shoulder (55) is formed and that the shoulder (55) projects laterally past the contact surface (51).

18. Tool holder or tool carrier according to one of the preceding claims, **characterized in that** on one contact surface (51) of the sliding block (31) in the area of the base surface (49) at least one projection (53) is formed.

19. Tool holder or tool carrier according to claim 18, **characterized in that** the projection (53) projects by less than 0,3 mm, preferably by 0,2 mm, past the contact surface (51).

## Revendications

1. Combinaison composée d'au moins un coulisseau (31) et d'un porte-outil (3) pour des outils, le porte-outil comportant une surface de contact (29), des moyens pour la fixation du ou des coulisseaux (31) étant prévus dans la surface de contact (29), les moyens pour la fixation du ou des coulisseaux (31) comportant au moins une rainure (23) et un filet intérieur, le ou les coulisseaux (31) comprenant un corps de base pourvu d'au moins une surface d'appui (51) et d'une surface de base (49) ainsi qu'un trou débouchant (39) traversant la surface de base (49) et le ou les coulisseaux (31) étant insérés dans la ou les rainures du porte-outil de telle sorte qu'une partie du ou des coulisseaux (31) fait saillie de la surface de contact (29), une fente (37) étant ménagée dans le ou les coulisseaux (31), **caractérisée en ce qu'**une base de la fente (37) s'étend parallèlement à la surface de base (49), et **en ce que** la fente (37) s'étend dans la même direction que la ou les surfaces d'appui (51) et est ménagée de façon excentrée.

2. Combinaison composée d'au moins un coulisseau (31) et d'un support d'outil (1) pour la réception d'un porte-outil (3), le support d'outil comportant une surface de serrage (29), des moyens pour la fixation du ou des coulisseaux (31) étant prévus dans la surface de serrage (5), les moyens pour la fixation du ou des coulisseaux (31) comportant au moins une rainure (123) et un filet intérieur, le ou les coulisseaux (31) comprenant un corps de base pourvu d'au moins une surface d'appui (51) et d'une surface de base (49) ainsi qu'un trou débouchant (39) traversant la surface de base (49) et le ou les coulisseaux (31) étant insérés dans la ou les rainures du support d'outil (1), de telle sorte qu'une partie du ou des coulisseaux (31) fait saillie de la surface de serrage (5), une fente (37) étant formée dans le ou les coulisseaux (31), **caractérisée en ce qu'**une base de la fente (37) s'étend parallèlement à la surface de base (49), et **en ce que** la fente (37) s'étend dans la même direction que la ou les surfaces d'appui (51) et est ménagée de façon excentrée.

3. Porte-outil ou support d'outil selon la revendication 1 ou 2, **caractérisé en ce que** deux rainures (23; 123) sont ménagées dans la surface de contact (29) ou la surface de serrage (5), et **en ce que** les deux rainures (23; 123) s'étendent perpendiculairement l'une à l'autre.

4. Porte-outil ou support d'outil selon l'une quelconque des revendications précédentes, **caractérisé en ce qu'**au moins un trou fileté, qui forme le filet intérieur des moyens pour la fixation, est ménagé dans un fond de rainure de la ou des rainures (23; 123).

5. Porte-outil ou support d'outil selon l'une quelconque des revendications précédentes, **caractérisé en ce que** le ou les trous filetés servent à la fixation et/ou à l'écartement d'un coulisseau (31).

6. Porte-outil ou support d'outil selon l'une quelconque des revendications précédentes, **caractérisé en ce que** le ou les trous filetés sont positionnés de manière excentrée dans la rainure (23; 123).

7. Porte-outil ou support d'outil selon la revendication 6, **caractérisé en ce que** deux trous filetés sont ménagés de manière excentrée dans la rainure (23; 123), et **en ce que** les trous filetés sont positionnés sur la même face d'un axe de symétrie (35) de la rainure (23; 123) ou sur les faces opposées de l'axe de symétrie (35).

8. Porte-outil ou support d'outil selon l'une quelconque des revendications précédentes, **caractérisé en ce que** le ou les trous filetés ne s'étendent pas perpendiculairement sur la surface de contact (29) du porte-outil ou de la surface de serrage (5) du support d'outil.

9. Porte-outil ou support d'outil selon l'une quelconque des revendications précédentes, **caractérisé en ce que** la ou les rainures (23; 123) sont étagées, de sorte qu'une poche est formée au-dessus d'une partie d'une paroi latérale de la rainure (23; 123) servant de surface d'appui pour un ou plusieurs coulisseaux (31).

10. Porte-outil ou support d'outil selon la revendication 9, **caractérisé en ce que** la poche sert à recevoir la partie en retrait (55) formée sur une des surfaces d'appui (51) du coulisseau (31).

11. Porte-outil ou support d'outil selon la revendication 10, **caractérisé en ce que** la partie en retrait (55) fait saillie par une surface d'attaque (61) de la surface de contact (29) du porte-outil (3) ou de la surface de serrage (5) du support d'outil, lorsque le coulisseau (31) est inséré dans la rainure (23; 123).

12. Support d'outil selon l'une quelconque des revendications 2 à 11, **caractérisé en ce qu'**un trou de réception (7) est ménagé dans la surface de serrage (5), et **en ce que** l'axe longitudinal du trou de réception (7) s'étend perpendiculairement à la surface de serrage (5).

13. Support d'outil selon l'une quelconque des revendications 2 à 12, **caractérisé en ce que** plusieurs filets de fixation (25) sont présents dans la surface de serrage (5).

14. Porte-outil ou support d'outil selon l'une quelconque des revendications précédentes, **caractérisé en ce que** la fente (37) du coulisseau (31) s'étend parallèlement à la ou aux surfaces d'appui (51) et à la surface de base (49) ou de manière inclinée par rapport à celles-ci.

15. Porte-outil ou support d'outil selon l'une quelconque des revendications précédentes, **caractérisé en ce qu'**un axe longitudinal du trou débouchant (39) du coulisseau (31) se situe entre un plan sous-tendu par la fente (37) et l'une des surfaces d'appui (51).

16. Porte-outil ou support d'outil selon l'une quelconque des revendications précédentes, **caractérisé en ce que** le trou débouchant (39) est tronconique (41) à son extrémité opposée à la surface de base (49) du coulisseau (31).

17. Porte-outil ou support d'outil selon l'une quelconque des revendications précédentes, **caractérisé en ce qu'**une partie en retrait (55) est formée sur une des surfaces d'appui (51) du coulisseau (31), et **en ce que** la partie en retrait (55) fait saillie latéralement de la surface d'appui (51).

18. Porte-outil ou support d'outil selon l'une quelconque des revendications précédentes, **caractérisé en ce qu'**au moins une partie saillante (53) est formée sur une surface d'appui (51) du coulisseau (31) dans la zone de la surface de base (49).

19. Porte-outil ou support d'outil selon la revendication 18, **caractérisé en ce que** la partie saillante (53) fait saillie de moins de 0,3 mm, de préférence de 0,2 mm, de la surface d'appui (51).
